Europäisches Patentamt

European Patent Office

Office européen des brevets

(19)

(11) Publication number: **0 055 496**
**B1**

(12) **EUROPEAN PATENT SPECIFICATION**

(45) Date of publication of patent specification: **28.05.86**

(51) Int. Cl.⁴: **B 01 D 3/04**

(21) Application number: **81201278.9**

(22) Date of filing: **19.11.81**

(54) **Method for removing vinyl chloride from an aqueous sluray of polyvinyl chloride particles.**

(30) Priority: **31.12.80 GB 8041574**

(43) Date of publication of application:
**07.07.82 Bulletin 82/27**

(45) Publication of the grant of the patent:
**28.05.86 Bulletin 86/22**

(84) Designated Contracting States:
**BE DE FR GB IT NL**

(56) References cited:
**DE-A-1 920 268**
**DE-B-1 220 831**
**FR-A-1 172 811**
**FR-A-1 434 868**
**US-A-2 862 696**
**US-A-3 410 540**
**US-A-3 988 116**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Pek, Johan Jan Barend**
**Badhuisweg 3**
**NL-1031 CM Amsterdam (NL)**
Inventor: **Paardekooper, Steef**
**Badhuisweg 3**
**NL-1031 CM Amsterdam (NL)**

(74) Representative: **Aalbers, Onno et al**
**P.O. Box 302**
**NL-2501 CH The Hague (NL)**

EP 0 055 496 B1

Courier Press, Leamington Spa, England.

## Description

The present invention relates to a method for removing vinylchloride from an aqueous slurry of polyvinylchloride particles.

More in particular, the present invention relates to the use of a column for the above purpose, provided with a plurality of horizontal trays arranged one above the other, each of the trays being provided with apertures for the passage of steam and with at least one discharge device for slurry, said discharge device being open at the upper end and extending partly above and partly below the tray, the part of the discharge device extending below the tray being provided with a slurry discharge opening.

Columns of the above-mentioned type can be applied for removing monomers from aqueous slurries of polymers. To this end a slurry of a polymer, such as polyvinyl chloride particles, is introduced into the top part of a column of the above-mentioned type, whereas steam is introduced into the bottom part of the column. The downwardly flowing slurry is intensively contacted with the upward steam flow, so that the monovinyl chloride in the polymer particles is stripped therefrom as a gas. The steam and the monovinyl chloride are subsequently discharged from the top part of the column, whereas the treated slurry of polyvinyl chloride particles is discharged from the bottom part of the column.

The use of columns for stripping slurries of polyvinyl could be of interest since it has become known that there is a probability that monovinyl chloride, which may come free from polyvinyl chloride particles, may be carcinogenic. Polyvinyl chloride, being applied for many purposes, is produced in very large quantities over the whole world. The most commonly applied method for producing polyvinyl chloride is to polymerize vinyl chloride in an aqueous suspension to form solid polyvinyl chloride particles. When the polymerization has been finished amounts of non-polymerized monovinyl chloride may remain in the produced polyvinyl chloride particles. The monovinyl chloride may come free during the working-up of the polyvinyl chloride particles, especially when operating at high temperatures. In view of the above, the monovinyl chloride should be removed prior to working up the polyvinyl chloride particles.

During the last years many attempts have been made to provide trayed columns for contacting slurries with gases which can operate in an efficient manner in order to reach the required high production rates. All the known columns of the above type for treating slurries, however, have the disadvantage that the apertures in the column trays for the passage of steam become sooner or later clogged by the solid particles in the slurries. Since the accessibility to the trays of a column is always rather difficult, cleaning of the trays is time-consuming and therefore expensive.

Moreover, when columns of the above-mentioned type are used for removing monovinyl chloride from polyvinyl chloride particles, it is essential that the polyvinyl chloride particles do not remain too long in the column, to avoid prolonged exposure to high process temperatures which may cause thermal degradation and consequently reduction of the quality of the polyvinyl chloride particles.

The object of the present invention is to provide a method for removing vinyl chloride from an aqueous slurry of polyvinyl chloride particles in a column which can operate during long periods without requiring cleaning and in which the quality of the solid particles of the slurry is not reduced during the operation.

The method for removing vinylchloride from an aqueous slurry of polyvinyl chloride particles comprises according to the invention passing said slurry downwardly, countercurrent to an upward flow of stripping steam, through a column provided with a plurality of horizontal trays arranged within said column one above the other, each of the trays being provided with apertures for the passage of steam and with at least one discharge device for slurry, said discharge device being open at the upper end and extending partly above and partly below the tray, the part of the discharge device extending below the tray being provided with a slurry discharge opening, wherein the distance between the upper end of the discharge device of a tray and the lower surface of a next higher tray is between 50 and 250 mm and wherein the said steam apertures each have a cross-sectional area of between 7 mm$^2$ and 1250 mm$^2$.

Preferably, the said upper ends have a distance of between 80 and 120 mm to the lower surface of the next higher tray and the distance between adjacent steam apertures is at most 40 mm.

By positioning the trays of a column in such a manner that the distance between the upper end of a discharge device of a tray to the lower surface of a next upper tray is within the above-mentioned range, it is ensured that during operation of the column the lower surfaces of the trays are regularly washed free of clogged particles by liquid splashes from a next lower tray, without considerably increasing the risk of liquid passing through the apertures for the passage of gas in upward direction.

The invention will now be described in more detail by way of example only with reference to the accompanying drawings, wherein:

Figure 1 shows a vertical cross-section of a column to carry out the method according to the invention;

Figure 2 shows detail II of Figure 1 on an enlarged scale;

Figure 3 shows cross-section III—III of Figure 1;

Figure 4 shows a first alternative of the tray shown in Figure 3;

Figure 5 shows a second alternative of the tray shown in Figure 3.

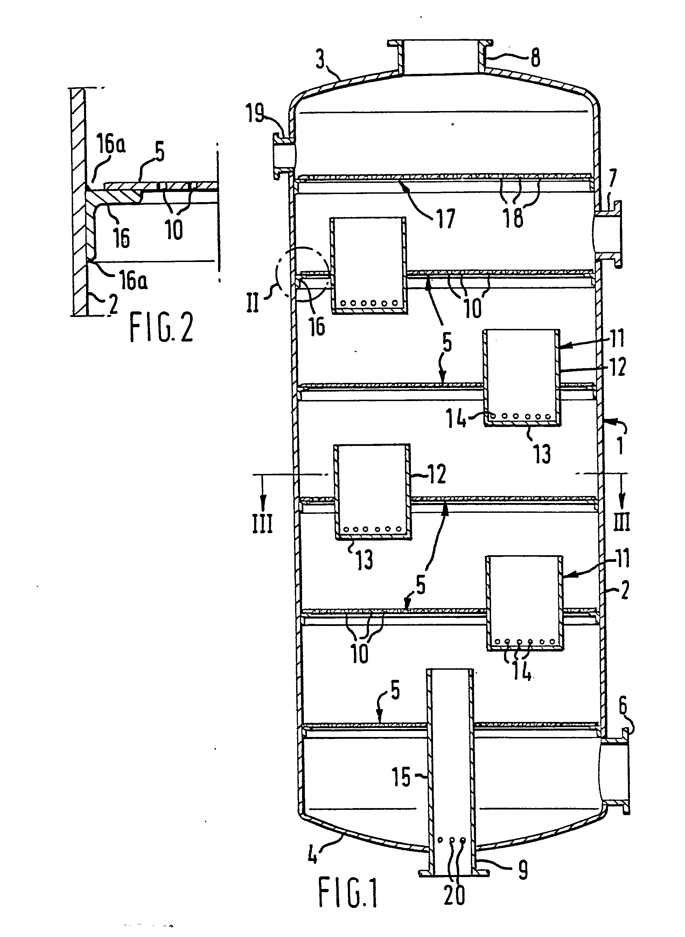

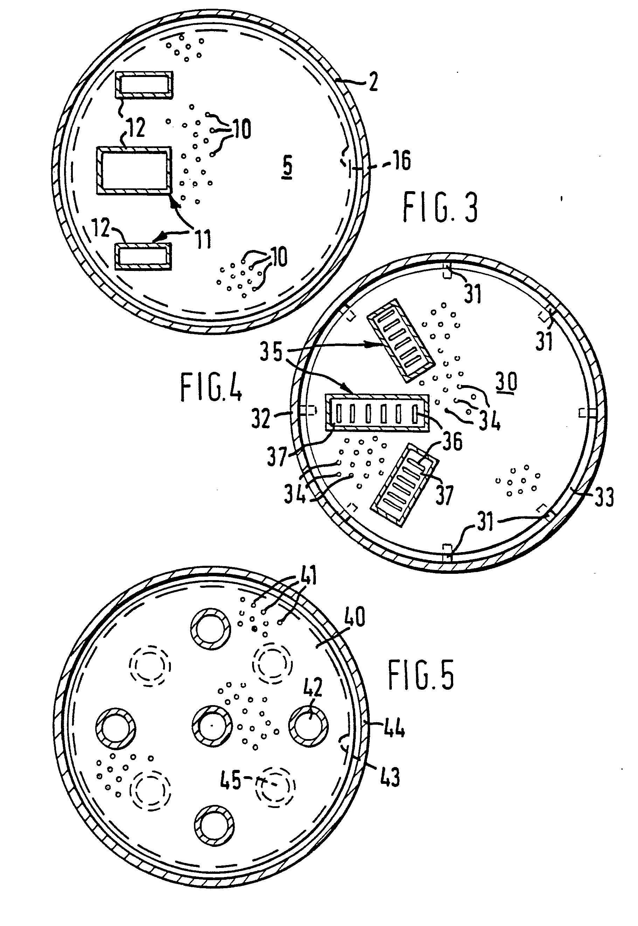

In Figure 1, a column for contacting a slurry of polyvinyl chloride particles with steam, indicated by reference numeral 1, comprises a vertically disposed tubular shell 2, a top wall 3 and a bottom wall 4. The interior of the column 1 is provided with a plurality of horizontal trays 5 arranged one above the other.

For the supply of steam and slurry into the interior of the column, the column 1 is provided with two inlets, viz. a steam inlet 6 arranged in the lower part of the tubular shell 2 and a slurry inlet 7 arranged in the upper part of the tubular shell 2. Steam and slurry can be discharged from the interior of the column 1 via a steam outlet 8 and a slurry outlet 9, respectively, wherein the steam outlet 8 is arranged in the top wall 3 and the slurry outlet 9 is arranged in the bottom wall 4. Each tray 5 is provided with a plurality of apertures 10 for the passage of steam. Apart from the lowermost tray 5, each tray 5 is further provided with a number of discharge devices 11 for the discharge of slurry to a next lower tray 5. The discharge devices 11 are positioned on each tray 5 in a manner as clearly shown in Figure 3. Said discharge devices 11 being open at the upper ends, each comprise side walls 12 and a bottom wall 13. Slurry discharge openings 14 are arranged in the lower parts of opposite side walls 12. Each discharge device 11 is so arranged on a tray 5 that the side walls 12 thereof extend partly above and partly below the relevant tray 5. For the discharge of slurry from the lowermost tray 5, this tray is provided with a discharge device formed by an open-ended discharge tube 15 having openings 20 arranged in the wall thereof and passing through an opening in said tray. The slurry outlet 9 is formed by the lower part of said discharge tube 15.

As more clearly shown in Figure 2, the trays 5 are each supported by a support ring 16. Although there is a gap between the outer edge of each tray 5 and the inner surface of the tubular shell 2, allowing expansion and contraction of the trays, the presence of the support ring 16 prevents the flow of material through this gap. The support rings 16 may be secured to the inner surface of the tubular shell 2 by means of not shown welds. To ensure that the trays 5 are sealed against the ring 16 in a fluid-tight manner a not shown sealing ring, such as a gasket, may be arranged between each tray 5 and the accompanying support ring 16.

In order to prevent the entrainment of solid and/or liquid particles by the steam stream leaving the column 1 a so-called wash tray 17, provided with apertures 18, is arranged in the upper part of the column 1 above the slurry inlet 7. A liquid inlet 19 for the supply of washing liquid onto the wash tray 17 is arranged in an opening of the tubular shell 2. As will be explained hereinafter the wash tray 17 further prevents fouling of the top wall 3 of the column 1 by the solid particles of the slurry treated in the column.

The operation of the column shown in Figure 1 will now be explained with reference to the treatment of an aqueous slurry of polyvinyl chloride particles with steam.

Steam and an aqueous slurry of polyvinyl chloride particles are introduced into the column via the steam inlet 6 and the slurry inlet 7, respectively. After a short time lag each of the trays 5 is provided with a layer of slurry. Steam passes in upward direction through the apertures 10 in the trays 5, thereby intensively coming into contact with the slurry. By this contact the vinyl chloride monomer in the polymer particles is stripped therefrom as a gas. When the height of the slurry and steam mixture formed on a tray 5 exceeds the height of the discharge devices 11 above said tray 5, the slurry is thrown over the upper ends of the side walls 12 of these discharge devices 11. Via the discharge openings 14 in the lower parts of the discharge devices 11 the slurry is subsequently discharged to a next lower tray 5. The discharge openings 14 are arranged near the lower ends of the side walls 12, to ensure that the polyvinyl chloride particles of the slurry cannot settle down on the bottom walls 13 of the discharge devices 11, but are entrained by the liquid leaving the discharge devices 11 via the discharge openings 14.

The presence of slurry in the discharge devices 11 ensures that steam cannot pass through the discharge openings 14, but is forced to flow through the apertures 10 in the trays 5.

The number of trays 5 is chosen such that the slurry upon reaching the lowermost tray 5 is substantially free of the vinyl chloride monomer. On the lowermost tray 5 the slurry is for the last time contacted with steam, and subsequently discharged from said tray 5 and the interior of the column 1 via the discharge tube 15 and the outlet 9 formed by the lower part of the said tube 15. Slurry which might pass through the apertures 10 in the lowermost tray 5, is collected in the bottom part of the column and will be drained off through the discharge tube 15 via the openings 20.

The steam having passed the uppermost tray 5 is forced to flow via the apertures 18 in the wash tray 17 towards the gas outlet 8, thereby brought into contact with water or another washing liquid supplied on said wash tray 17 via the liquid inlet 19. Upon this contact polyvinyl chloride particles entrained by the steam, passing the uppermost tray 5, are caught by the water on the tray 17, so that the steam is washed free of the solid particles prior to leaving the column 1 via the gas outlet 8. By the arrangement of the wash tray 17 the top wall 3 and the gas outlet 8 are prevented from being fouled by solid particles, resulting in pressure drop and eventually clogging of the gas outlet 8.

Due to the difference between the dew points of steam and monovinyl chloride, the gaseous monomer may easily be removed from the steam by lowering the temperature. After being reheated the steam can be recirculated to the column 1 for treating a new quantity of polyvinyl chloride slurry.

During the treatment of the slurry, polyvinyl chloride particles may be entrained by the steam and form a sticky layer onto the lower surfaces of the trays 5 and the wash tray 17. These sticky layers are regularly removed by liquid jets from a next lower tray 5. To ensure that the liquid levels on the trays are so high that regularly liquid jets will splash against the lower surfaces of the trays 5 without considerably enlarging the amount of liquid passing through the apertures 10, the distance between the upper end of each discharge device 11 and the discharge tube 15 of a tray 5 and the lower surface of a next upper tray 5 or the wash tray 17 should be chosen between 50 and 250 mm. Even more suitable is a distance between the upper end of a discharge device 11 or the discharge tube 15 and the lower surface of a next upper tray in the range of between 80 and 120 mm.

To ensure that no solid particles will settle down on the upper surfaces of the trays 5, the distance between adjacent apertures 10 in a tray 5 should be at most 40 mm. Even more suitable is a distance of at most 35 mm. By such an arrangement of the apertures 10 relative to each other the steam flowing through these apertures 10 will remove the particles on the tray surface between the apertures 10. The apertures 10 in the trays 5 should be relatively small to enable that the slurry on a tray 5 is well contacted by the steam so that enough liquid splashes will reach the lower surface of a next upper tray. Thereto the apertures 10 for the passage of gas should each have a diameter which is at most 40 mm. To avoid that the apertures 10 are clogged by particles of the slurry these apertures should have a minimum diameter of at least 3 mm and preferably a minimum diameter of at least 5 mm.

As clearly shown in Figure 2 steam cannot pass through the gap between the outer rim of a tray 5 and the inner surface of the tubular shell 2, due to the presence of the support ring 16. In this manner all the steam is forced to flow through the apertures 10, so that an optimal contact between the slurry and the steam is obtained.

Reference is now made to Figure 4 showing a first alternative of the tray shown in Figure 3. The tray indicated by reference numeral 30 is supported by a number of angle bars 31 secured to the inner surface of a tubular shell 32 of a column. An annular layer 33 of flexible material is secured around the outer periphery of the tray 30. Due to the presence of this flexible layer 33 the tray 30 seals against the tubular shell 32 independent on expansion or contraction of the tray 30. The tray 30 is provided with a number of apertures 34 for the passage of steam and a number of discharge devices 35 for the discharge of slurry from the tray 30 in downward direction. These discharge devices 35 extend above and below the tray 30 in the same manner as the discharge devices 11, shown in Figure 1. In the arrangement of Figure 4 the discharge devices 35 are each provided with slurry discharge openings 36 arranged in the bottom wall 37 thereof. For use in a column for contacting an aqueous slurry of polyvinyl chloride particles and steam a plurality of trays of the type as shown in Figure 4 are installed in the interior of the column one above the other. The distance between the upper ends of the discharge devices 35 and the lower surface of an adjacent tray arranged above the tray 30 should be between 50 and 250 mm, so that sufficient liquid will splash against the lower surfaces of the trays for cleaning these surfaces. For the operation of a column provided with trays of the type as shown in Figure 4 reference is made to the above description of the operation of the column shown in Figure 1. To avoid that liquid from the discharge devices 35 will rain directly into the discharge devices of an adjacent lower tray, the trays are turned over 180° relative to each other, so that an arrangement substantially similar to that shown in Figure 1 is obtained.

The second alternative of the tray type shown in Figures 1—3, is depicted in Figure 5. This tray indicated by reference numeral 40 is provided with apertures 41 for the passage of steam, and with discharge devices 42 for slurry. The tray is supported by a support ring 43 which ring is connected to a column wall 44. The support ring 43 seals the passage between the outer rim of the tray 40 and the inner surface of the column wall 44 in the manner as described with reference to Figure 2. The discharge devices of a tray adjacent to the tray 40 are indicated by reference numeral 45 and have been illustrated in dotted lines. By this arrangement slurry from the discharge devices 42 of the tray 40 will first flow over the perforated tray surface of the next lower tray, thereby brought into contact with steam before entering the discharge devices 45 of this next lower tray. For discharging slurry from the discharge devices 42 and 45, not shown discharge openings may be arranged in the lower parts of the side walls of these discharge devices.

The present invention is not restricted to the type of wash tray as shown in Figure 1. The wash tray may be provided with separate discharge means for the discharge of wash liquid from said tray.

Moreover, the invention is not restricted to the use of trays provided with apertures having a circular shape for the passage of steam. Steam passages having another shape, for example a square shape, may also be applied.

The cross-sectional area of each aperture for the passage of steam should suitably be in the range of 7 mm$^2$ through 1250 mm$^2$ and preferably in the range of 19 mm$^2$ through 1250 mm$^2$ for creating enough gas pressure to prevent clogging of the apertures by particles of the slurry.

The invention is not restricted to the arrangements of discharge devices shown in the drawings, or a specific number of discharge devices on a tray. When the trays are to be used in small-diameter columns, a single discharge device on each tray may be sufficient. Further, each tray may be provided with a number of parallel elongated discharge devices extending substantially from edge to edge of the tray.

## Claims

1. A method for removing vinylchloride from an aqueous slurry of polyvinylchloride particles which comprises passing said slurry downwardly, countercurrent to an upward flow of stripping steam, through a column provided with a plurality of horizontal trays arranged within said column one above the other, each of the trays being provided with apertures for the passage of steam and with at least one discharge device for slurry, said discharge device being open at the upper end and extending partly above and partly below the tray, the part of the discharge device extending below the tray being provided with a slurry discharge opening, wherein the distance between the upper end of the discharge device of a tray and the lower surface of a next higher tray is between 50 and 250 mm and wherein the said steam apertures each have a cross-sectional area of between 7 mm$^2$ and 1250 mm$^2$.

2. A method as claimed in claim 1, wherein said upper ends have a distance of between 80 and 120 mm to the lower surface of the next higher tray and wherein the distance between adjacent steam apertures is at most 40 mm.

## Patentansprüche

1. Verfahren zur Entfernung von Vinylchlorid aus einer wäßrigen Aufschlämmung von Polyvinylchloridteilchen, wobei man die Aufschlämmung von oben nach unten im Gegenstrom zu einem aufsteigenden Strom eines Abstreifdampfes durch eine Kolonne führt, die mit einer Mehrzahl horizontaler Böden versehen ist, die innerhalb der Säule einer über dem anderen angeordnet sind, wobei jeder der Böden mit Öffnungen für den Durchgang von Dampf versehen ist, sowie mit mindestens einer Austragevorrichtung für die Aufschlämmung und die Austragevorrichtung am oberen Ende offen ist und sich teilweise über und teilweise unter den Boden erstreckt, wobei der Teil der Austragevorrichtung, der sich nach unterhalb des Bodens erstreckt, mit einer Austrageöffnung für die Aufschlämmung versehen ist, und wobei der Abstand zwischen dem oberen Ende der Austragevorrichtung eines Bodens und der Unterseite des nächst höherliegenden Bodens zwischen 50 und 250 mm beträgt, und wobei die Dampföffnungen jeweils einen Querschnitt zwischen 7 mm$^2$ und 1250 mm$^2$ aufweisen.

2. Verfahren nach Anspruch 1, wobei die oberen Enden einen Abstand zwischen 80 und 120 mm von der Unterseite des nächst höheren Bodens besitzen und der Abstand zwischen benachbarten Dampföffnungen höchstens 40 mm beträgt.

## Revendications

1. Procédé d'extraction du chlorure de vinyle à partir d'une bouille aqueuse de particules de chlorure de polyvinyle, dans lequel on fait passer ladite bouillie vers le bas, à contrecourant par rapport à un courant ascendant de vapeur de strippage, à travers une colonne équipée d'une série de plateaux horizontaux montés dans ladite colonne les uns au-dessus des autres, chacun des plateaux présentant des ouvertures pour le passage de vapeur d'eau et au moins un dispositif de décharge pour la bouillie, ledit dispositif de décharge étant ouvert à l'extrémité supérieure et s'étendant partiellement au-dessus et partiellement au-dessous du plateau, la partie du dispositif de décharge s'étendant au-dessous du plateau comportant une ouverture de décharge pour la bouille, la distance entre l'extrémité supérieure du dispositif de décharge du plateau et la surface inférieure du plateau suivant étant comprise entre 50 et 250 mm et lesdites ouvertures pour la vapeur ayant chacune une aire de section transversale de 7 mm$^2$ à 1250 mm$^2$.

2. Procédé selon la revendication 1, dans lequel lesdites extrémités supérieures sont à une distance de 80 à 120 mm de la surface inférieure du plateau supérieur suivant et dans lequel la distance entre les ouvertures adjacentes pour la vapeur d'eau ne dépasse pas 40 mm.

FIG.2

FIG.1

FIG. 3

FIG.4

FIG.5